# EUROPEAN PATENT APPLICATION

(11) **EP 1 385 096 A2**
(43) Date of publication of application: **28.01.2004**
(21) Application number: 03011641.2
(22) Date of filing: 22.05.2003
(51) Int. Cl.: G06F 17/30

(54) **Apparatus and method for managing memory in mobile communication terminal**

(30) Priority: 22.07.2002 KR 2002042928
(71) Applicant: SAMSUNG ELECTRONICS CO., LTD., Suwon-City, Kyungki-do (KR)
(72) Inventor: Kim, Yong-Nam, c/o Samsung Electronics Co., Ltd., Suwon-city, Kyunghi-do (KR)
(74) Representative: Grünecker, Kinkeldey, Stockmair & Schwanhäusser Anwaltssozietät

(57) **Abstract**

An apparatus and method for managing a memory in a mobile communication terminal. The apparatus enables a user to freely store user data without limiting user data types or the number of the user data by adopting a file system inside of a mobile communication terminal, and allows the user to selectively store data as needed by the user. The apparatus generates the user data as a file in case of storing the user data in the memory, stores the file in the memory, and provides a user interface to the file such that the user gains access to the file in file units or deletes the file in file units.

## Description

The present invention relates to an apparatus and method for managing a memory in a mobile communication terminal, and more particularly to an apparatus and method for managing a memory storing user data in a mobile communication terminal.

In these times, following the current trend of rapidly expanding functions of a mobile communication terminal having a variety of functions, the contents (i.e., the amount of information) to be stored in a storage part of the mobile communication terminal are rapidly increasing. However, there is a shortage of storage space of the mobile communication terminal as compared with the increasing volume of information, so that many users are increasingly dissatisfied with the shortage of storage space. The mobile communication terminal has been developed from basic functions such as phone call reception/transmission to a recent function of downloading a variety of contents via a browser, so that the need for more storage space is rapidly increasing.

There are two kinds of media used as permanent storage space in a current terminal, that is, an EEPROM (Electrically Erasable and Programmable ROM) functioning as an NV (Non-Volatile) memory and a flash memory (i.e., a flash ROM) used as storage space for executing a main program. The NV memory freely performs Read/Write operations, has a simple and secure software (S/W) program, and stores large amounts of information, for example, an ESN (Electronic Serial Number), a phone number, and RF data, etc. However, the NV memory has a slower access speed and a memory limitation of about several tens of Kbytes, so that it is not able to store large amounts of data therein. Due to degradation of the access speed, a terminal has to load large amounts of information into a memory (e.g., a RAM) having a high access speed during an initial booting operation. The flash memory has large-sized memory space of about several Mbytes, and has a faster access speed. Although the flash memory freely performs Read/Write operations, it cannot write new data in once-written memory area. As a result, the flash memory must delete prior data contained in the memory area, and then must update the memory area with the new data. There is a disadvantage in that such delete operations in most of flash memories are performed only in a single sector unit (commonly, 64 Kbytes) due to physical characteristics of the flash memory. As a result, in order to freely use the flash memory as user data storage space in an application section, specific software technique for maintaining and managing the flash memory is needed.

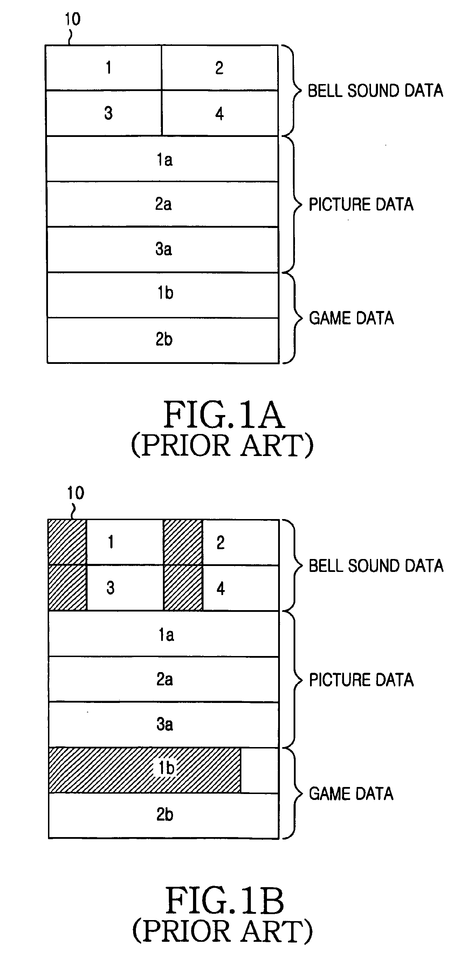

Fig. 1a is a view illustrating an intemal configuration of a general flash memory. Fig. 1b is a view illustrating an intemal configuration of a general flash memory when data are stored in the general flash memory shown in Fig. 1a.

Typically, in case of using a flash memory, since a maximum size of data to be stored in the flash memory is a specific previously defined size, the data are stored according to the defined specific size, irrespective of a real size of the data. Referring to Fig. 1a, a flash memory includes four bell sound data areas 1, 2, 3 and 4, three picture data areas 1a, 2a and 3a, and two game data areas 1b and 2b. Predetermined memory space is assigned to data of the same type. If a flash memory is implemented as the above, an overall software process is simplified and easily developed. For example, provided that a maximum size is defined as 25 Kbytes in case of melody data downloadable from a browser, a conventional mobile communication terminal unconditionally occupies all of 25 Kbytes when storing the melody data in the flash memory, irrespective of a real size of the melody data stored in the predetermined space of 25 Kbytes. As a result, data other than the melody data cannot be written in the predetermined space of 25 Kbytes.

Namely, a conventional method for storing user data in a flash memory previously determines the number of data per user, occupies memory space with a maximum size of each data, and then divides the occupied memory space into many sections in case of storing data. For example, provided that a mobile communication terminal downloads three kinds of download items, such as a "Bell Sound", "Picture", and "Game" shown in Fig. 1a, from a browser, a maximum size of each data is defined as 25 Kbytes in case of melody data, defined as 40 Kbytes in case of picture data, and defined as 64 Kbytes in case of game data.

However, actually, most of bell sound data is less than 5 Kbytes, and very few data have a size of 25 Kbytes. As a result, in the case where bell sound data of 5 Kbytes is stored in each of the data areas 1, 2, 3 and 4 as shown in oblique-lined sections of Fig. 1b, 22 Kbytes of data space is wasted in each bell sound data area.

Therefore, although the conventional method assigns each data to storage space of a predetermined size (e.g., 1 Mbytes) by effectively distributing a maximum size of each data to a flash memory, the flash memory is capable of storing only five game data, eight picture data and fourteen melody data therein. In this way, in the case where the number of data storable in a flash memory is previously limited by a terminal manufacturer and a manufactured product of the flash memory comes onto the market, the manufactured product of the flash memory cannot satisfy all the users having different interests and desires, because one user may desire to download more game data than picture and melody data, and another user may desire to download only melody data other than picture and game data. As a result, the aforementioned conventional method for storing user data in a flash memory is inconsistent with various desires of all the users, thereby limiting the number and implementation of the user's desires.

Also, in case of downloading each data, real data is always less than a maximum size and data less than 50% of the maximum size comprises most of memory space, thereby degrading use efficiency of a flash memory. In other words, a size of user data to be stored in an application may be considerably less than a size of an allocated area of a flash memory, thereby causing serious memory waste. Further, since the number of generable data is limited even in terminal's unique function data (e.g., a schedule function, memorandum function, and phone book function, etc. ) except for the aforesaid downloadable data shown in Figs. 1a and 1b, more memory space cannot be allocated to a desired item of a user.

Thus the flash memory implemented with the aforesaid user data storage technique has a limitation to the number of data even in a mass storage flash memory, thereby causing a waste of memory space. Namely, there is a disadvantage in that a user has to adopt a flash memory having a lot of empty storage space which is never used.

It is the object of the present invention to provide an apparatus, a mobile communication terminal and method for allowing a user to directly store and manage his or her desired data, irrespective of a type and size of user data and the number of the user data that are predetermined to be stored in a memory.

This object is solved by the subject matters of the independent claims.
Preferred embodiments are defined in the dependent claims.

In accordance with the present invention, the above and other aspects can be accomplished by the provision of an apparatus for enabling a user to manage a memory storing various kinds of user data in a mobile communication terminal, including a memory for storing the user data in file units; a controller for generating the user data as a file when storing the user data in the memory, storing the file-type user data in the memory, and providing a user interface to the file-type user data stored in the memory so as to enable the user to access the file-type user data in file units or delete the file-type user data in file units; a display for receiving a graphic screen for the user interface from the controller, and displaying the graphic screen thereon; and an input unit for enabling a user to select a memory file displayed on the display, and allowing the user to store and delete the selected memory file.

The above and other aspects, features and other advantages of the present invention will be more clearly understood from the following detailed description taken in conjunction with the accompanying drawings, in which:
Fig. 1a is a view illustrating an internal configuration of a general flash memory;
Fig. 1b is a view illustrating an internal configuration of a general flash memory when data is stored in the general flash memory shown in Fig. 1a;
Fig. 2 is a view illustrating a block diagram of a mobile communication terminal in accordance with a preferred embodiment of the present invention;
Fig. 3 is a view illustrating a display screen state indicating file information of a flash memory on a display of a mobile communication terminal in accordance with a preferred embodiment of the present invention;
Fig. 4 is a flow chart illustrating operations of an application manager in accordance with a preferred embodiment of the present invention;
Fig. 5 is a flow chart illustrating operations of a display manager in accordance with a preferred embodiment of the present invention;
Fig. 6 is a flow chart illustrating operations of a file manager in accordance with a preferred embodiment of the present invention; and
Fig. 7 is a flow chart illustrating a control procedure performed when downloading data in a mobile communication terminal in accordance with a preferred embodiment of the present invention.

Now, preferred embodiments of the present invention will be described in detail with reference to the annexed drawings. In the drawings, the same or similar elements are denoted by the same reference numerals even though they are depicted in different drawings. In the following description, a detailed description of known functions and configurations incorporated herein will be omitted when it may make the subject matter of the present invention rather unclear.

A mobile communication terminal has various kinds of functions and a network-related function for downloading various game data or bell sound data, etc., via an Internet browser, and storing and executing them. Therefore, a performance of the mobile communication terminal may be determined by how much data the mobile communication terminal contains and uses.

The present invention is a method and an apparatus for managing and sharing at least one memory in a mobile communication terminal irrespective of a user data type and the number of user data, selectively stores data according to various desires of the user, and enables the user to directly maintain and manage the memory. In other words, the present invention enables a user to properly distribute internal space of his or her own memory to user data according to a type of the user data without causing a waste of memory area, or enables the user to selectively store only his or her desired data in the memory.

The plurality of user data having different type include one or more of bell sound data, game data, still image, motion picture, multimedia data, phone book data, address book data, and name card data. The user data are downloaded from outer through wire or/and wireless networks. And the user data are generated itself in the mobile communication terminal by user.

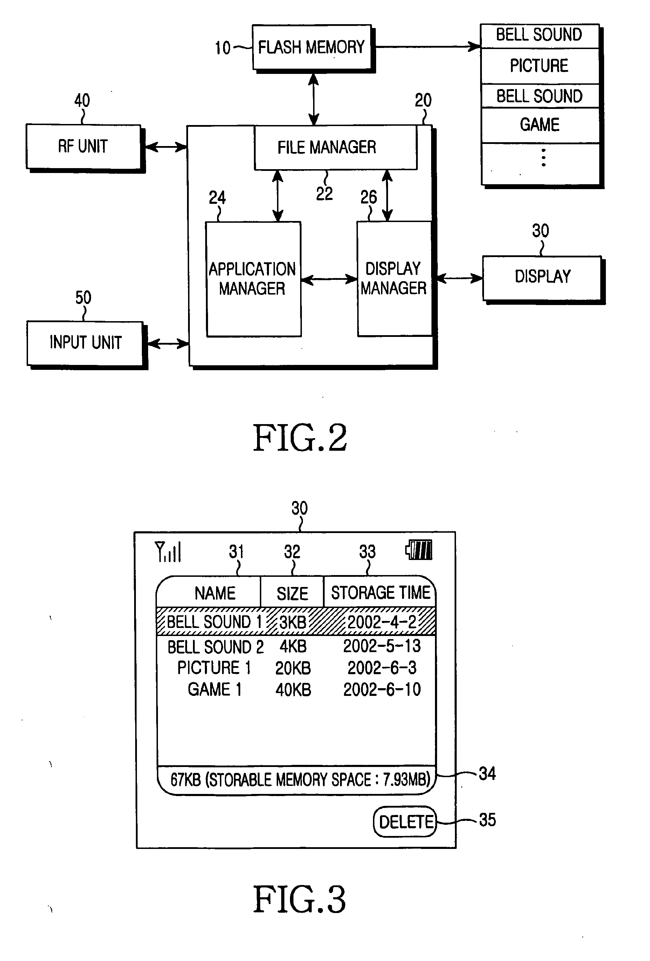

Fig. 2 is a view illustrating a block diagram of a mobile communication terminal in accordance with a preferred embodiment of the present invention.

Referring to Fig. 2, a controller 20 performs an overall control operation of a mobile communication terminal. The controller 20 stores or deletes data stored in a flash memory 10 in file units. In more detail, in case of storing user data in the flash memory 10, the controller 20 generates the user data as a file, and stores the file-type user data in the flash memory 10. Also, the controller 20 provides a user interface to the file-type user data stored in the flash memory 10 in such a way that a user gains access to the file-type user data in file units or deletes the file-type user data in file units.

For this purpose, the controller 20 includes a file manager 22, an application manager 24 and a display manager 26. The file manager 22, the application manager 24, and the display manager 26 are interconnected as shown in Fig. 2, and thus they exchange commands with one another. The file manager 22 is a manager for controlling a flash memory 10 in file units using a software technique called an Embedded File System (EFS). The application manager 24 properly controls data to be permanently stored from a browser or other program, and then transmits the resultant data to the file manager 22. The display manager 26 is a manager for displaying a current status of a memory being allocated to each data according to a user's request.

The file manager 22 is implemented with a manageable software program like a file system EFS in such a way that a flash memory is used as a memory device. The file system EFS generates each data as a file and manages it in file units in such a way that mass storage data can be read and written. In order to perform commands requested by the application manager 24, the file manager 22 using such a file system EFS generates data in file units, corrects or deletes the data in file units if necessary in such a way that it enables other files to use corresponding memory space. In this case, the file manager 22 does not classify the memory space into many sections according to a type of the data to be stored, but generates a file after being allocated memory space if only there is a storage request signal for any data.

The application manager 24 firstly processes data to be permanently stored in a file, transmits the data to the file manager 22, and then enables the file manager 22 to store the data therein. Otherwise, the application manager 24 requests a data request signal from the file manager 22 to read and execute the data. In case of storing data in a memory, the application manager 24 determines whether the memory has enough space to store the data. Also, if a user needs memory space, the application manager 24 commands a display manager 26 to indicate a current memory status. The application manager 24 provides a user with a tool for managing contents currently stored in a flash memory according to a user's request, and is interworked with a program capable of reading and executing the data stored in the flash memory. In other words, the application manager 24 makes a command of a user's request, gives the command to the file manager 22 and display manager 26, and responds to signals from the file manager 22 and the display manager 26.

The display manager 26 receives the command from the application manager 24, requests a current memory status from the file manager 22, and displays information, such as each file name, generation time and size of each file, etc., in such a way that a user can directly manage his or her own memory.

The display manager 26 displays a variety of messages on a display 30 according to a control signal of the controller 20. For instance, the display 30 is implemented with an LCD (Liquid Crystal Display), a TFT-LCD (Thin Film Transistor Liquid Crystal Display), or an organic EL (Electroluminescence). A RF unit 40 controls transmission and reception of voice data, character data, and control data upon receiving a control signal of the controller 20. An input unit 50 includes a plurality of number keys and a plurality of function keys, and transmits input data corresponding to a key selected by a user to the controller 20. For example, the input unit 50 may include four arrow keys (i.e., up/down/right/left buttons) for moving a basic image frame displayed on the display 30. The input unit 50 may be implemented with a general key matrix or a touch screen. In case of the input unit 50 implemented with a touch screen, many number keys, function keys, and arrow keys displayed on the touch screen are selected or input using a specific input tool such as a stylus pen, etc.

A mobile communication terminal includes a memory (not shown) for storing program data needed to control its own operations and other data generated by a user while operating. This memory includes a flash memory 10 for storing user data therein. The flash memory 10 stores various kinds of user data as a file therein. Accordingly, many files corresponding to the user data are stored in the flash memory 10, and the remaining memory area other than the area having the files becomes an empty memory area in the flash memory 10.

In case of storing data upon receiving a user's request, an application manager 24 fabricates the data in the form of a file. In more detail, the application manager 24 enables various kinds of data to be stored as a single file in the present invention. The application manager 24 checks a size of the fabricated file so as to determine whether the fabricated file can be stored in the remaining memory capacity or not. In this case, in the case where the application manager 24 requests a current memory capacity from the file manager 22, it transmits the remaining memory capacity value to the application manager 24. The application manager 24 compares the remaining memory capacity value with the size of the file, and determines whether sufficient memory space is available. If it is determined that sufficient memory space is available, the application manager 24 enables the file manager 22 to generate a file of data to be stored, and then commands the file manager 22 to reduce a memory capacity value. If sufficient memory is not available, the file manager 22 enables a display manager 26 to display current memory information on a display 30 for user's recognition, and also commands the display manager 26 to display a file deletion request message on the display 30 so that a user can delete a file to create sufficient space in a memory. Therefore, if a user deletes a file using a specific tool such as the input unit 50, the file manager 22 creates a memory capacity corresponding to the deleted file capacity and then stores user data in the created memory capacity. In this manner, in case of storing data, there is no need to define the number of data while classifying the data, and also there is no need to delete pre-existing data while classifying data according to a data type.

Further, a mobile communication terminal provides a user with a tool for freely retrieving and deleting a current stored file at any time in such a way that the user is capable of conveniently managing a memory. Firstly, if there is a memory management request signal from a user, the application manager 24 commands the display manager 26 to display storage information of a current flash memory thereon. As a result, the display manager 26 receives the storage information of the current flash memory from the file manager 22, and displays file information containing a file name, file storage time, and file size, etc. thereon. Thereafter, in case of deleting the file upon receiving a user's request, the file manager 26 creates space in a flash memory as much as the deleted file. Also, in case of driving data, the file manager 26 enables the data to interwork with a corresponding program.

Fig. 3 is a view illustrating a display screen state indicating file information of a flash memory on a display of a mobile communication terminal in accordance with a preferred embodiment of the present invention. Referring to Fig. 3, in the case where a user deletes a file stored in a flash memory or edits the flash memory, file information composed of a file name 31, file size 32, and file storage time, etc. is displayed on a screen of a display 30. If a user selects a specific file using the input unit 50, the display manager 26 displays the selected file using a highlight tool. As shown in Fig. 3, used capacity and available capacity of a current flash memory 10 are indicated on a display screen. For example, provided that available capacity of a current flash memory 10 is set to 8 Mbytes, the display manager 26 displays a file-stored capacity of 67 KB and a storable capacity of 7.93 MB of the flash memory on a display 30, as shown by a drawing numeral 34 of Fig. 3. As a result, a user can easily store data in the flash memory 10, and can easily delete a file stored in the flash memory 10 by selecting a numeral 35 of Fig. 3.

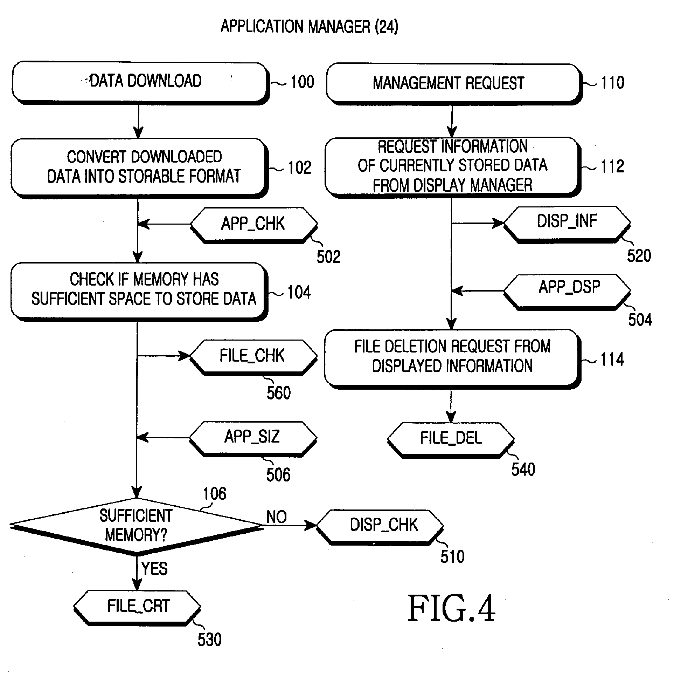

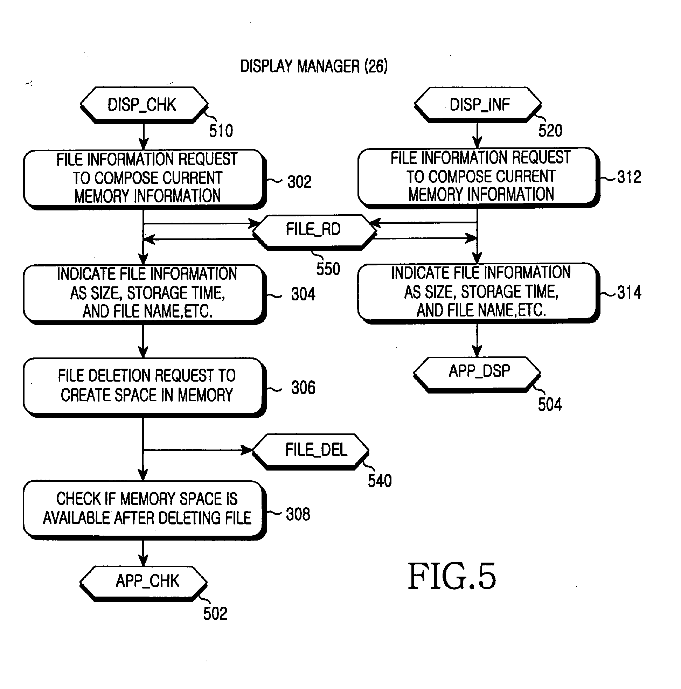

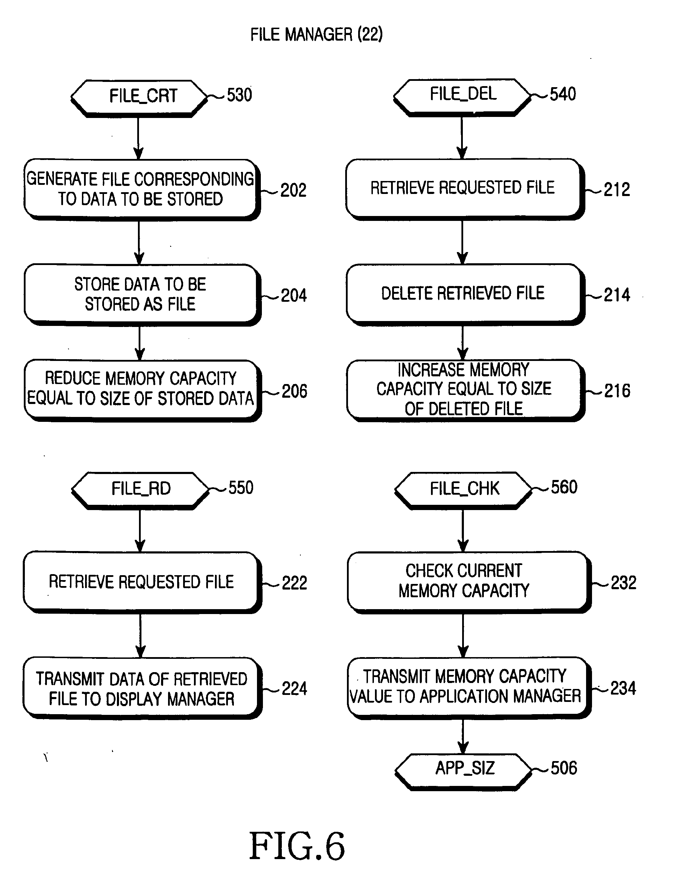

Fig. 4 is a flow chart illustrating operations of an application manager 24 in accordance with a preferred embodiment of the present invention. Fig. 5 is a flow chart illustrating operations of a display manager 26 in accordance with a preferred embodiment of the present invention. Fig. 6 is a flow chart illustrating operations of a file manager 22 in accordance with a preferred embodiment of the present invention.

Referring to Figs. 2 and 6, an application manager 24 is connected to a file manager 22 and a display manager 26. In case of downloading and storing predetermined data by a user and in case of managing a flash memory 10 by a user, the application manager 24 is operated in conjunction with the file manager 22 and the display manager 26.

With reference to Figs. 4-6, a left-side flow chart illustrates operations of the application manager 24 in the case where a user downloads predetermined data, and a right-side flow chart illustrates operations of the application manager 24 in the case where a user manages a flash memory.

Firstly, if a user downloads predetermined data 100, then the application manager 24 converts the downloaded data into a format storable in a flash memory 10 at step 102. Since the downloaded data has different formats for every service provider, the application manager 24 converts the downloaded data into the same format data. After that, the application manager 24 determines whether the flash memory has enough space to store the data to be stored at step 104. The application manager 24 requests the file manager 22 to provide a current flash memory capacity as shown in FILE_CHK 560 in FIG. 6. Then, in FIG. 6, the file manager 22 checks a capacity value of a current flash memory at step at step 232, and then transmits the capacity value of the flash memory to the application manager 24 as shown in APP_SIZ 506. In FIG. 4, In the case where the application manager 24 receives the capacity value of the flash memory from the file manager 22, a capacity of the downloaded data is compared with a current capacity of a current flash memory at step 106, and then the application manager 24 determines whether the downloaded data can be stored in the flash memory 10.

If it is determined that the flash memory 10 has sufficient capacity to store the downloaded data therein, the application manager 24 commands the file manager 22 to store the downloaded data in the flash memory 10 as shown in FILE_CRT **530**. Therefore, the file manager 22 generates a file corresponding to data to be stored at step 202 (Fig. 6). Subsequently, the file manager 22 stores data to be stored in the flash memory 10 as a generated file at step 204, and reduces a memory capacity by the size of the data stored in the flash memory 10 at step 206.

In the meantime, in the case where a capacity of the flash memory 10 is insufficient to store the downloaded data, the application manager 24 commands the display manager 26 to indicate current flash memory information on a display 30, as shown in DISP_CHK **510**. The display manager 26 requests file information from the file manager 22 to compose the current flash memory information at step 302 (Fig. 5), as shown in FILE_RD 550 in the Fig.6. In the Fig. 6, if the file manager 22 receives a signal requesting current flash memory information from the display manager 26, it retrieves the requested files at step 222, and transfers data of the retrieved files to the display manager 26 at step 224. Then, the display manager 26 in the Fig. 5 indicates file information as a file name, file size, and file storage time, etc. thereon at step 304, as shown in Fig. 3. Thereafter, at step 306 the display manager 26 displays a file deletion request signal on a display 30, and thus enables a user to selectively delete desired files among many files stored in the flash memory 10 in order to newly store the downloaded data in the flash memory 10, thereby obviating a shortage of memory capacity. Also, the display manager 26 commands the file manager 22 to perform a file deletion process, as shown in FILE_DEL **540**. The file manager 22 retrieves a file requested by a user at step 212, and then deletes the retrieved file at step 214. After that, the file manager 22 increases memory capacity by the capacity of the deleted file at step 216(Fig. 6). Return to the Fig. 4, the file manager 22 deletes the file as the above, the display manager 26 commands the application manager 24 to check if the downloaded data can be stored in the flash memory 10 as shown in APP_CHK **502**. Then, the application manager 24 goes to step 104. Operations of the application manager 24 will be omitted below because they have been already described.

Further, in the case where a user manages the flash memory 10 at step 110, the application manager 24 goes to step 112, and requests current data information stored in the flash memory 10 from the display manager 26 at step 112, as shown in DISP_INF **520**. Referring to Fig. 5, the display manager 26 accordingly requests file information from the file manager 22 to compose current flash memory information at step 312, as shown in FILE_RD **550**. Referring to Fig. 6, if the file manager 22 receives a signal requesting the current flash memory information from the display manager 26, it retrieves the requested files at step 222, and transfers data of the retrieved files to the display manager 26 at step 224. Referring back to Fig. 5, as a result, the display manager 26 indicates file information as a file name, file size, and file storage time, etc. thereon at step 314, as shown in Fig. 3. Subsequently, referring back to Fig. 4, at step 114 if there is a user request signal for deleting the files displayed on a display 30, the application manager 24 commands the file manager 22 to perform a file deletion process, as shown in FILE_DEL **540.**

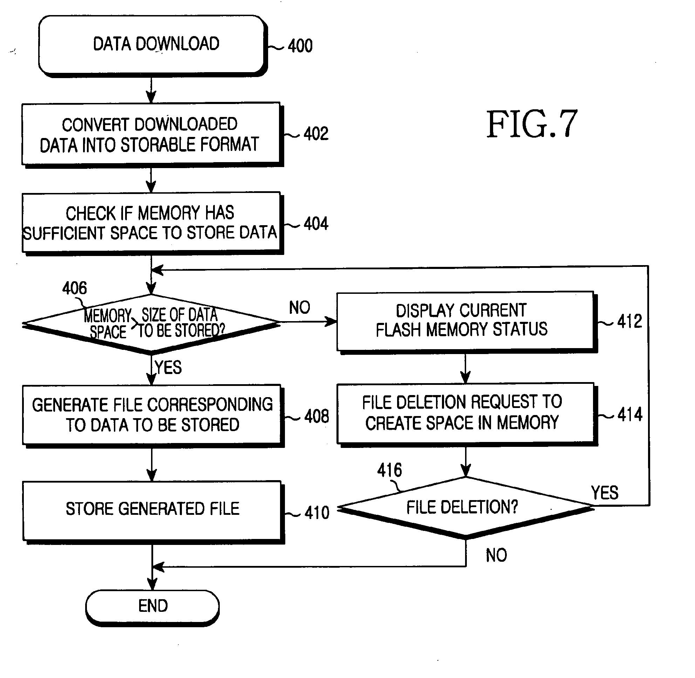

Fig. 7 is a flow chart illustrating a control procedure performed in case of downloading data in a mobile communication terminal in accordance with a preferred embodiment of the present invention.

Referring to Figs. 2 and 7, in case of downloading data by a user(400), a controller 20 of a mobile communication terminal goes to step 402, and converts the downloaded data into a format for storing the downloaded data in a flash memory 10 at step 402. Then, the controller 20 determines at step 404 whether the flash memory 10 has sufficient space to store the data to be stored, and compares the space of the flash memory 10 with the size of the data to be stored at step 406. If the size of the data to be stored is less than the space of the flash memory 10, then the controller 20 goes to step 408 to generate a file corresponding to the data to be stored, and stores the generated file in the flash memory 10 at step 410.

If the size of the data to be stored is larger than the space of the flash memory 10, the controller 20 goes to step 412 to display a current flash memory status on a display 30. Subsequently, the controller 20 displays a file deletion request message on a display 30 at step 414 in such a way that it creates space in the flash memory 10 for storing data therein. The controller 20 determines at step 416 whether a specific file is selected and deleted by a user. If the specific file is deleted at step 416, the controller 20 returns to step 406 to compare the memory space with the size of the data to be stored. In other words, the controller 20 repeats steps 406 to 416 until the size of the data to be stored is less than a current storable capacity of the flash memory 10. If the size of the data to be stored is less than the current storable capacity (i.e., memory space) of the flash memory 10, the controller 20 goes to step 408 to generate a file corresponding to the data to be stored, and stores the generated file in the flash memory 10 at step 410.

As a result, a user easily manages a memory, and stores and administers his or her desired data in the memory in conformity with his or her desire. Also, the present invention provides a mobile communication terminal with a tool for indicating a memory size for every data type and data storage time, etc., thereby enhancing a user's convenience.

As apparent from the above description, the present invention enables a user to freely store user data without limiting user data types or the number of the user data by adopting a file system inside of a mobile communication terminal, and allows the user to selectively store his or her desired data depending on a variety of desires of the user. As a result, the user can easily manage a memory, and store and administer his or her desired data in the memory in conformity with his or her desire.

Although the preferred embodiments of the present invention have been disclosed for illustrative purposes, those skilled in the art will appreciate that various modifications, additions and substitutions are possible, without departing from the scope of the invention as disclosed in the accompanying claims. For example, a memory storing the user data can be applicable to all kinds of memories capable of storing/deleting data.

## Claims

1. An apparatus for enabling a user to manage a memory storing various kinds of user data in a mobile communication terminal, comprising:
a memory for storing the user data in file units;
a controller for generating the user data as a file for storing the user data in the memory, storing the file in the memory, and providing a user interface to the file stored in the memory to enable the user to access the file or delete the file;
a display for receiving a graphic screen for the user interface from the controller, and displaying the graphic screen thereon; and
an input unit for enabling a user to select a memory file displayed on the display, and allowing the user to store and delete the selected memory file.

2. The apparatus as set forth in claim 1, wherein the controller includes:
a file manager for generating and deleting each user data in and from the memory in file units, and performing memory area allocation depending on file generation or deletion;
an application manager for enabling the user data to be stored as a file, transmitting the user data to the file manager, storing the user data in the file manager, and requesting the user data from the file manager to read and execute the user data; and
a display manager for receiving a command from the application manager, requesting a current memory status from the file manager, displaying information associated with the file and enabling the user to directly manage the memory.

3. The apparatus as set forth in claim 2, wherein the application manager determines whether there is a storable capacity in the memory equal to a size of data to be stored, commands the display manager to indicate a current memory status for creating additional memory capacity if needed, and provides a user with a tool for managing user data currently stored in the memory.

4. The apparatus as set forth in one of claims 1 to 3, wherein the controller provides a file deletion message for creating space in the memory if the size of data to be stored is larger than the storable capacity of the memory.

5. The apparatus as set forth in one of claims 1 to 4, wherein the user data includes a plurality of data includes one or more of bell sound data, game data, still image, motion picture, multimedia data, phone book data, address book data, and name card data.

6. The apparatus as set forth in claim 1, wherein the user data generated in the mobile communication terminal and downloaded from outer through wire or wireless networks.

7. The apparatus as set forth in one of claims 1 to 4, wherein the memory includes a flash memory.

8. A method for enabling a user to manage a memory storing a plurality of user data in a mobile communication terminal, comprising the steps of:
determining whether there is a storable capacity in the memory equal to the size of the user data to be stored; and
if the size of the user data is less than the storable capacity of the memory, generating the user data as a file, and storing the user data in the memory.

9. The method as set forth in claim 8, further comprising the step of:
if the size of the user data is larger than the storable capacity of the memory, displaying a file deletion message for creating space in the memory.

10. The method as set forth in claim 9, further comprising the step of:
if the user deletes a predetermined file stored in the memory upon receiving the file deletion message repeating the determining step for checking a storable capacity of the memory.

11. The method as set forth in claim 8 or 9, wherein the user data includes a plurality of data including one or more of bell sound data, game data, still image, motion picture, multimedia data, phone book data, address book data, and name card data.

12. The method as set forth in one of claims 8 to 11, wherein the user data generated in the mobile communication terminal and downloaded from outer through wire or wireless networks.

13. The method as set forth in claim 8, wherein the memory includes a flash memory.

14. A mobile communication terminal comprising an apparatus for enabling a user to manage a memory storing various kinds of user data in said mobile communication memory according to the apparatus of one of claims 1 to 7.
